**Europäisches Patentamt**

**European Patent Office**

**Office européen des brevets**

(19)

(11) Numéro de publication: **0 115 450**
**B1**

(12)

# FASCICULE DE BREVET EUROPEEN

(45) Date de publication du fascicule du brevet:
**06.08.86**

(51) Int. Cl.⁴: **C 23 F 3/06,** C 23 F 1/16,
**C 01 B 15/037**

(21) Numéro de dépôt: **84400020.8**

(22) Date de dépôt: **06.01.84**

(54) Stabilisation de solutions aqueuses contenant du péroxyde d'hydrogène, de l'acide fluorhydrique et des ions métalliques.

(30) Priorité: **07.01.83 FR 8300210**

(43) Date de publication de la demande:
**08.08.84 Bulletin 84/32**

(45) Mention de la délivrance du brevet:
**06.08.86 Bulletin 86/32**

(84) Etats contractants désignés:
**AT BE CH DE FR GB IT LI LU NL SE**

(56) Documents cités:
**FR - A - 1 383 066**
**FR - A - 1 472 467**
**US - A - 3 756 957**
**US - A - 3 841 905**

**CHEMICAL ABSTRACTS, vol. 80, no. 14, 8 avril 1974,**
**page 157, no. 73166v, Columbus, Ohio, US**
**CHEMICAL ABSTRACT, vol. 81, no. 2, 15 juillet 1974,**
**page 92, no. 5454h, Columbus, Ohio, US**

(73) Titulaire: **ATOCHEM, 4 & 8, Cours Michelet La**
**Défense 10, F-92800 Puteaux (FR)**

(72) Inventeur: **Pralus, Christian, 3 rue des Gasses,**
**F-69450 Saint Cyr au Mont d'Or (FR)**

(74) Mandataire: **Leboulenger, Jean et al, ATOCHEM**
**Département Propriété Industrielle, F-92091 Paris la**
**Défense 10 Cédex 42 (FR)**

ACTORUM AG

## Description

La présente invention concerne la stabilisation de solutions aqueuses contenant du peroxyde d'hydrogène, de l'acide fluorhydrique et des ions métalliques, dans lesquelles l'acide fluorhydrique peut être partiellement sous forme de sels.

De telles solutions trouvent une application notamment dans le traitement de surface des métaux, comme le décapage et le polissage chimique des aciers inoxydables.

Ces solutions sont instables aussi bien lors de leur mise en oeuvre, par exemple dans le traitement de surface des métaux, qu'au repos, les ions métalliques qu'elles renferment catalysant la décomposition du peroxyde d'hydrogène.

Des remèdes ont été proposés pour réduire la vitesse de cette décomposition du peroxyde d'hydrogène au sein de solutions du même type.

Par exemple, le brevet britannique n° 1 164 347 propose l'addition d'un ou plusieurs alcools aliphatiques saturés à une solution aqueuse de peroxyde d'hydrogène contenant de l'acide fluorhydrique, employée pour le polissage chimique du cuivre et de ses alliages.

Le brevet des Etats-Unis d'Amérique n° 3 537 926 préconise l'addition d'un acide aromatique carboxylique ou dicarboxylique, tel que l'acide benzoïque, aux solutions aqueuses acides contenant du peroxyde d'hydrogène et du bifluorure d'ammonium HF, NH₄F employées pour le polissage des alliages de fer.

La demande de brevet japonais, Japan Kokaï n° 73.52 638 revendique l'addition d'urée et d'un acide inorganique aux solutions aqueuses de peroxyde d'hydrogène contenant de l'acide fluorhydrique ou ses sels, mises en oeuvre pour le polissage du fer et des aciers.

Les remèdes énoncés ci-dessus pour améliorer la stabilité de solutions comprenant du peroxyde d'hydrogène, de l'acide fluorhydrique libre ou partiellement combiné sous forme de sels, tel que le bifluorure d'ammonium, et des ions métalliques, présentent l'inconvénient soit d'être peu économiques, soit d'avoir des conséquences néfastes pour l'environnement.

La présente invention pallie ces inconvénients et fournit un procédé améliorant la stabilité de solutions aqueuses contenant du peroxyde d'hydrogène, des ions métalliques et de l'acide fluorhydrique pouvant être partiellement sous forme de sels consistant à ajouter à ladite solution un ou plusieurs hydroxydes choisis parmi les hydroxydes de métaux alcalins, tels l'hydroxyde de sodium et l'hydroxyde de potassium, et l'hydroxyde d'ammonium, en quantité insuffisante pour neutraliser la totalité de l'acidité présente.

L'effet stabilisant d'une telle addition est très surprenant. En effet, les hydroxydes de métaux alcalins ou d'ammonium sont connus pour être eux-mêmes des catalyseurs de décomposition du peroxyde d'hydrogène. De plus, l'amplitude de la stabilisation obtenue selon l'invention est bien supérieure à celle à laquelle on pourrait s'attendre en supposant que le ou les hydroxydes de métaux alcalins ou d'ammonium soient transformés, par réaction avec l'acide fluorhydrique, en fluorures dont on connaît les qualités complexantes vis-à-vis des ions métalliques.

La quantité totale dudit hydroxyde ajoutée est généralement comprise entre 0,1 mole et 2,0 moles par litre de solution renfermant le peroxyde d'hydrogène, de préférence entre 0,2 et 1,0 mole par litre de cette solution.

Les concentrations respectives de peroxyde d'hydrogène et d'acide fluorhydrique dans les solutions aqueuses auxquelles s'applique l'invention sont celles habituellement définies pour les solutions contenant ces deux composés et servant au traitement de surface des métaux. Généralement, la concentration de peroxyde d'hydrogène dans de telles solutions est comprise entre 5 et 150 grammes par litre et la concentration d'acide fluorhydrique, libre ou partiellement combiné sous forme de sels, exprimée en fluor total est supérieure à 38 grammes par litre.

L'invention sera à présent décrite plus en détails en se référant aux exemples non limitatifs ci-après.

### Exemple 1

A une solution aqueuse contenant, par litre, 20 grammes de peroxyde d'hydrogène, de l'acide fluorhydrique correspondant à 73,2 grammes de fluor total, 29,3 grammes de fer total, 5,98 grammes de chrome total, 0,13 gramme de manganèse total, 0,07 gramme de nickel total et 0,0086 gramme de cuivre total, pour laquelle la vitesse moyenne de décomposition de l'eau oxygénée, mesurée à 26°C sur un intervalle de 2 heures, est de 0,90 millimole par minute et par litre, on ajoute de l'hydroxyde de sodium NaOH de façon à avoir 0,44 mole de NaOH par litre de solution.

La vitesse moyenne de décomposition du peroxyde d'hydrogène, déterminée comme ci-dessus, n'est plus alors que de 0,48 millimole par minute et par litre, c'est-à-dire environ deux fois moins que celle constatée sans addition d'hydroxyde de sodium.

Le même résultat est obtenu lorsque l'hydroxyde de sodium est remplacé par la même quantité molaire d'hydroxyde de potassium KOH ou d'hydroxyde d'ammonium NH₄OH.

### Exemple 2

A la même solution que dans l'exemple 1 on ajoute de l'hydroxyde de sodium de façon à avoir 0,66 mole de NaOH par litre de solution.

La vitesse moyenne de décomposition du peroxyde d'hydrogène, mesurée comme dans l'exemple 1, est alors de 0,36 millimole par minute et par litre de solution, soit 2,5 fois moins que celle constatée en l'absence d'hydroxyde de sodium.

### Exemple 3

Dans la solution de l'exemple 1 on ajoute de l'hydroxyde de sodium de façon à avoir 0,22 mole de NaOH par litre de solution. La vitesse moyenne de décomposition du peroxyde d'hydrogène, mesurée comme dans l'exemple 1, est alors de 0,56 millimole par minute et par litre de solution et donc 1,6 fois plus faible que celle constatée sans addition d'hydroxyde de sodium.

*Exemple 4*

A une solution aqueuse contenant, par litre, 20 grammes de peroxyde d'hydrogène, de l'acide fluorhydrique correspondant à 104,5 grammes de fluor total, 60 grammes de fer total, 12,1 grammes de chrome total, 0,21 gramme de manganèse total, 0,11 gramme de nickel total et 0,015 gramme de cuivre total, et pour laquelle la vitesse moyenne de décomposition du peroxyde d'hydrogène, déterminé comme dans l'exemple 1, est de 1,80 millimole par minute et par litre, on ajoute de l'hydroxyde de sodium de façon à avoir 0,44 mole de NaOH par litre de solution. La vitesse moyenne de décomposition du peroxyde d'hydrogène, mesurée comme dans l'exemple 1 est alors de 0,88 millimole par minute et par litre, donc environ deux fois moindre que celle constatée sans addition d'hydroxyde de sodium.

*Exemple 5*

Dans la solution de l'exemple 2 on ajoute de l'hydroxyde d'ammonium $NH_4OH$ pour avoir 0,96 mole de $NH_4OH$ par litre de solution. La vitesse moyenne de décomposition du peroxyde d'hydrogène, mesurée dans les conditions définies dans l'exemple 1, est alors de 0,64 millimole par minute et par litre, soit trois fois plus faible environ que celle constatée sans addition d'hydroxyde d'ammonium.

*Exemple 6*

Dans la solution de l'exemple 4, on ajoute de l'hydroxyde d'ammonium de façon à avoir 0,44 mole de $NH_4OH$ par litre de solution. La vitesse moyenne de décomposition du peroxyde d'hydrogène, mesurée comme dans l'exemple 4, est alors de 0,9 millimole par minute et par litre de solution, et donc 2 fois plus faible que celle constatée sans addition d'hydroxyde d'ammonium. Ce résultat comparé à celui de l'exemple 4 confirme que l'hydroxyde de sodium et l'hydroxyde d'ammonium ont des effets équivalents comme déjà constaté dans l'exemple 1.

*Exemple 7*

Dans la solution de l'exemple 4, on ajoute du fluorure de sodium (NaF) de façon à avoir 0,44 mole de NaF par litre de solution. La vitesse moyenne de décomposition du peroxyde d'hydrogène, mesurée comme dans l'exemple 4, est alors de 1,1 millimole par minute et par litre de solution, et donc 1,64 fois plus faible que celle constatée sans addition de fluorure de sodium, mais 1,25 fois plus élevée que celle constatée lorsqu'on ajoute uniquement la même quantité molaire d'hydroxyde de sodium.

*Exemple 8*

A une solution aqueuse contenant, par litre, 20 grammes de peroxyde d'hydrogène, 112,9 grammes de fluor total correspondant à l'acide fluorhydrique libre ou partiellement combiné sous forme de sels dont 0,44 mole de fluorure d'ammonium $NH_4F$, les mêmes quantités de fer total, de chrome total, de manganèse total, de nickel total et de cuivre total que dans l'exemple 4, et pour laquelle la vitesse moyenne de décomposition du peroxyde d'hydrogène, mesurée comme dans les exemples précédents, est de 1,2 millimole par minute et par litre, on ajoute de l'hydroxyde d'ammonium de façon à avoir 0,44 mole de $NH_4OH$ par litre de solution. La vitesse moyenne de décomposition du peroxyde d'hydrogène, mesurée comme dans les exemples précédents est alors de 0,88 millimole par minute et par litre, soit environ 1,4 fois plus faible que celle constatée sans addition d'hydroxyde d'ammonium.

**Revendications**

1. Procédé pour améliorer la stabilité de solutions aqueuses contenant du peroxyde d'hydrogène, des ions métalliques et de l'acide fluorhydrique pouvant être partiellement sous forme de sels, consistant à ajouter à ladite solution au moins un hydroxyde choisi parmi les hydroxydes de métaux alcalins et l'hydroxyde d'ammonium, en quantité insuffisante pour neutraliser la totalité de l'acidité présente.

2. Procédé selon la revendication 1, caractérisé en ce que la quantité dudit hydroxyde est comprise entre 0,1 et 2 moles par litre de solution.

3. Procédé selon l'une quelconque des revendications 1 et 2, caractérisé en ce que ledit hydroxyde est ajouté à une solution renferment le peroxyde d'hydrogène à une concentration comprise entre 5 et 150 grammes par litre et l'acide fluorhydrique à une concentration exprimée en fluor total supérieure à 38 grammes par litre.

4. Solutions aqueuses contenant du peroxyde d'hydrogène, des ions métalliques et de l'acide fluorhydrique pouvant être partiellement sous forme de sels, stabilisées par un procédé selon l'une des revendications 1 à 3.

5. Application des solutions aqueuses de la revendication 4 au décapage et au polissage chimique des métaux.

6. Application selon la revendication 5 dans laquelle ledit métal est un acier inoxydable.

**Patentansprüche**

1. Verfahren zur Verbesserung der Stabilität wässriger Lösungen, die Wasserstoffperoxid, Metallionen und Fluorwasserstoffsäure, die teilweise in Form ihrer Salze vorliegen kann, enthalten, darin bestehend, dass man zu der genannten Lösung wenigstens ein Hydroxid, das aus den Alkalihydroxiden und Ammoniumhydroxid ausgewählt wird, in einer Menge zusetzt, die nicht zur Neutralisation der gesamten vorhandenen Acidität ausreicht.

2. Verfahren nach Anspruch 1, dadurch gekennzeichnet, dass die Menge des genannten Hydroxids zwischen 0,1 und 2 Mol pro Liter Lösung liegt.

3. Verfahren nach einem der Ansprüche 1 oder 2, dadurch gekennzeichnet, dass das genannte Hydroxid einer Lösung zugesetzt wird, die das Wasserstoffperoxid in einer Konzentration zwischen 5 und 150 g/l und die Fluorwasserstoffsäure in einer Konzentration von über 38 g Gesamtfluor pro Liter enthält.

4. Wässrige Lösungen, die Wasserstoffperoxid, Metallionen und Fluorwasserstoffsäure, die teilweise in Form ihrer Salze vorliegen kann, enthalten, stabilisiert nach einem Verfahren nach einem der Ansprüche 1 bis 3.

5. Anwendung der wässrigen Lösungen aus Anspruch 4 zum Putzen und chemischen Polieren von Metallen.

6. Anwendung nach Anspruch 5, wobei das genannte Metall ein nichtrostender Stahl ist.

## Claims

1. Process for improving the stability of aqueous solutions containing hydrogen peroxide, metal ions and hydrofluoric acid which may be partly in the form of salts, consisting in adding to the said solution at least one hydroxide chosen from alkali metal hydroxides and ammonium hydroxide, in a quantity which is insufficient to neutralize all of the acidity present.

2. Process according to claim 1, characterised in that the quantity of the said hydroxide is between 0.1 and 2 moles per litre of solution.

3. Process according to either of claims 1 and 2, characterised in that the said hydroxide is added to a solution containing hydrogen peroxide at a concentration of between 5 and 150 grams per litre and hydrofluoric acid at a concentration greater than 38 grams per litre, expressed as total fluorine.

4. Aqueous solutions containing hydrogen peroxide, metal ions and hydrofluoric acid which may be partly in the form of salts, which are stabilized by means of a process according to one of claims 1 to 3.

5. Application of the aqueous solutions of claim 4 to the chemical cleaning and polishing of metals.

6. Application according to claim 5, in which the said metal is a stainless steel.